# EUROPEAN PATENT SPECIFICATION

(11) **EP 3 726 482 B1**
(45) Date of publication and mention of the grant of the patent: **05.11.2025**
(21) Application number: 18887435.8
(22) Date of filing: 12.12.2018
(51) Int. Cl.: G07C 5/08, G06F 16/906, G06Q 10/20, G06Q 50/40, G06F 3/048, H04N 21/431, H04N 21/414, H04N 21/4788, H04N 21/488, H04N 21/41

(54) **VEHICLE FAULT WARNING DEVICE AND METHOD**
VORRICHTUNG UND VERFAHREN ZUR WARNUNG VOR FAHRZEUGFEHLERN
DISPOSITIF ET PROCÉDÉ D'AVERTISSEMENT DE DÉFAUTS DANS UN VÉHICULE

(30) Priority: 15.12.2017 CN 201711346018
(43) Date of publication of application: 21.10.2020
(73) Proprietor: NIO (Anhui) Holding Co., Ltd, Hefei City, Anhui Province (CN)
(72) Inventor: DONG, Yiwei, Hong Kong (CN); LIU, Yang, Hong Kong (CN); WANG, Menglu, Hong Kong (CN); ZHENG, Yayan, Hong Kong (CN); SHEN, Yiyu, Hong Kong (CN); ZHANG, Junling, Hong Kong (CN); XU, Xiaowei, Hong Kong (CN)
(74) Representative: Patentanwaltskanzlei WILHELM & BECK
(86) International application number: PCT/CN2018/120492
(87) International publication number: WO 2019/114733

(56) References cited:
- WO-A1-2014/001799
- CN-A- 101 551 669
- CN-A- 101 693 447
- CN-A- 102 774 323
- CN-A- 103 640 555
- CN-A- 105 094 113
- CN-A- 105 279 914
- CN-A- 105 607 629
- CN-A- 105 607 629
- CN-A- 105 976 451
- CN-A- 105 978 991
- US-A1- 2003 109 972

## Description

### Technical Field

The invention relates to the technical field of automobiles, and in particular to a vehicle fault warning device and method.

### Background Art

Motor vehicles are an indispensable transportation means in people's daily life at present, but modern people often neglect the maintenance of the motor vehicles due to their busyness, resulting in start inability possibly caused by faults and abnormality during driving of a user.

Generally, an instrument display panel of a motor vehicle in the market only displays one fault warning lamp, and there is no indication about an exact related fault position. The user, most of the time, only learns, through the fault warning lamp, that a fault occurs in the vehicle, but does not know what the fault is. More importantly, the user neither knows the severity of this fault, nor knows whether he or she should immediately stop or drive to a maintenance center for repair. In order to relieve the user's confusion and anxiety in the case of the vehicle fault, it is necessary to provide the user with more prompts and guidance.

The information disclosed above in the background of the invention is merely intended to facilitate understanding of the overall background of the invention, and should not be considered as an acknowledgement or any form of suggestion that the information constitutes the prior art already known to those of ordinary skill in the art.

CN 105 607 629 A discloses a vehicle fault prompting method, which includes acquiring a vehicle fault code corresponding to a fault except the fault displayed by a vehicle meter panel; sending the fault code to a service platform such that the service platform determines and returns the fault corresponding to the fault code; receiving the fault returned from the service platform, and generating a prompt for the fault corresponding to the fault code; and displaying the generated prompt.

CN 105 976 451 A discloses an HUD-based driving behavior detection method including: if data associated with vehicle fault codes and vehicle state is acquired; determining a vehicle fault level based on the acquired data; and pushing a prompt corresponding to the determined vehicle failure level to a display unit.

CN 105 978 991 A discloses a vehicle system includes a user terminal, a vehicle and a rescue server. A controller of the vehicle obtains operation state information of the vehicle, determines a fault occurs in the vehicle based on the operation state information, and further determines a fault level for the fault. The controller sends a rescue control signal to the user terminal when it determines that the vehicle needs rescue. The user terminal sends a rescue calling signal to the rescue server based on the rescue control signal, and the rescue server prompts rescuers according to the rescue calling signal.

CN 102 774 323 A discloses an in-vehicle failure warning system, which includes a central processing module, a CAN (controller area network) communication module and a display. The central processing module periodically sends failure detection commands to a vehicle CAN bus through the CAN communication module and receives failure codes in real time. The central processing module analyzes the failure codes to obtain corresponding failure, possible consequences and measures to be taken based on the failure codes, which are displayed to the user on the display.

CN 101 693 447 A discloses a vehicle monitoring and warning method. The method classifies alarm information according to vehicle system states and influence of failures on the vehicle indicated by the alarm information, and triggers different actions based on the classification to warn the driver to pay attention to the failures.

### Summary of the Invention

In order to solve at least one of the plurality of above problems in the prior art, the invention provides a vehicle fault warning method according to claim 1.

In the above method, the plurality of functional units comprise sensors, actuators and electronic control units (ECU) in an electronic control system of the vehicle.

In the above method, the faults are classified into three categories according to the severities: a minor fault, a major fault and a critical fault.

In the above method, for a fault in a specific category, at least three solutions are displayed to the user for selection.

According to another aspect of the invention, there is provided a vehicle fault warning device according to claim 5.

In the above device, the plurality of functional units comprise sensors, actuators and electronic control units (ECU) in an electronic control system of the vehicle.

In the above device, the faults are classified into three categories according to the severities: a minor fault, a major fault and a critical fault.

In the above device, the display unit is configured to: for a fault in a specific category, display at least three solutions to the user for selection.

According to a further aspect of the invention, there is provided a computer storage medium, which comprises a computer instruction, and when the computer instruction is executed, the aforementioned vehicle fault warning method is performed.

According to a further aspect of the invention, there is provided an automobile, which comprises the aforementioned vehicle fault warning device.

According to the technical solutions of the invention, current health states of various functional units are collected, one or more functional units in which faults occur are classified according to severities, and a user is notified in different display modes according to a classification result, so that the user is provided with all-round and timely guidance when a fault occurs in a vehicle (for example, the user is told about what the fault is, what the severity of the fault is and what he/she should do at the moment), and better user experience is provided.

Other features and advantages of the method and apparatus in the invention will become apparent or can be set forth more specifically by means of the drawings herein and the following detailed description of embodiments for explaining some principles of the invention together with the drawings.

### Brief Description of the Drawings

FIG. 1 is a flowchart of a vehicle fault warning method according to one embodiment of the invention; and
FIG. 2 is a schematic structure diagram of a vehicle fault warning device according to one embodiment of the invention.

### Detailed Description of Embodiments

The following description describes specific implementations of the invention to teach those skilled in the art the best mode about how to make and use the invention. In order to teach the principles of the invention, some conventional aspects have been simplified or omitted. Thus, the invention is not limited to the specific implementations described below, but only defined by the claims.

In the context of the invention, the term "automobile fault" is used to indicate that an automobile cannot implement its functions, such as a difficulty in starting the engine, an ignition fault, automobile oil leakage, water leakage, and a lighting system fault.

The terms "minor fault", "major fault", and "critical fault" are for classification of automobile faults in terms of consequences. Among them, "minor fault" may cause a driving stop, but will not cause damage to major parts, and can be repaired within a short time (about 30 minutes) with a vehicle toolkit and vulnerable parts or parts of low value; or although "minor fault" does not cause a driving stop, it has affected normal use and needs to be adjusted and repaired. "Major fault" may cause significant degradation of vehicle performance; or cause damage to major parts, and cannot be repaired within a short time (about 30 minutes) with a vehicle toolkit and vulnerable spare parts. "Critical fault" relates to personal safety, and may result in personal injuries or deaths; or cause main assemblies to be scrapped and heavy economic losses; or does not meet the regulatory requirements of braking, emission, noise, etc.

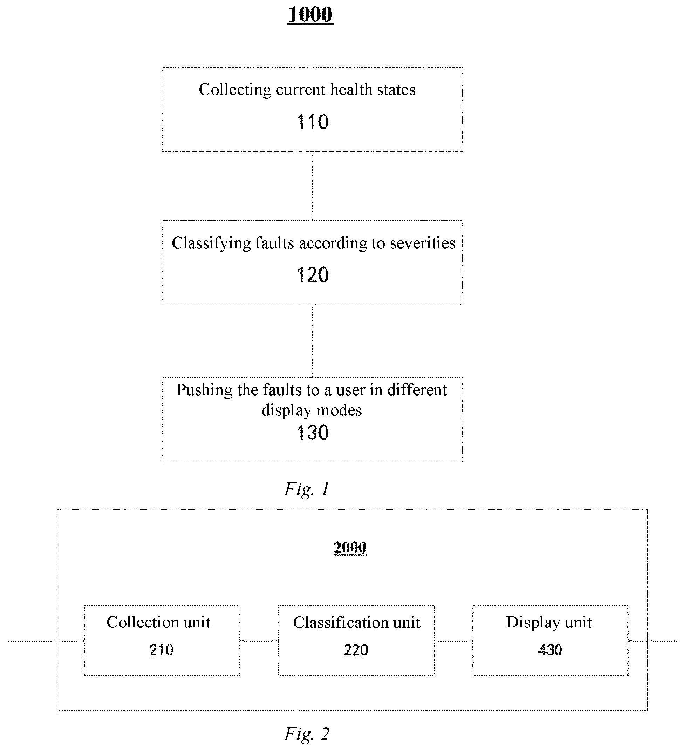

FIG. 1 is a flowchart of a vehicle fault warning method 1000 according to one embodiment of the invention. The method 1000 comprises the steps of:
step 110, collecting, from a plurality of functional units of the vehicle, current health states thereof;
step 120, classifying faults of one or more functional units of the plurality of functional units according to severities when it is determined that the one or more functional units fail;
step 130, pushing the faults to a user in different display modes according to different categories of the faults, that is to say, pushing a fault in a first category to the user in a first display mode, and pushing a fault in a second category to the user in a second display mode different from the first display mode.

In one embodiment of the invention, the plurality of functional units comprise sensors, actuators and electronic control units (ECU) in an electronic control system of the vehicle. For example, the sensors may comprise a tire pressure sensor, a temperature sensor, a water level sensor, etc. The electronic control units (ECU) may include but are not limited to an engine ECU, an anti-lock braking system (ABS) ECU, a supplemental restraint system (SRS) ECU, a body control module (BCM) ECU, a vehicle door module ECU, an anti-theft system ECU, an automatic transmission ECU, a multimedia system ECU, etc.

In one embodiment, the faults are classified into three categories according to the severities: a minor fault, a major fault and a critical fault. In another embodiment, according to occurrence positions of the faults of the automobile, the faults may be classified into: an electronic controlled gasoline injection engine fault, a transmission system fault, a steering system fault, a braking system fault, a running system fault, a vehicle body fault and an electrical system fault.

According to the invention, for the fault in the first category, the user is notified of the fault on an onboard screen only in a text reminding mode, and prompted to drive carefully and go to a maintenance center for repair as soon as possible; and for the fault in the second category, a button for calling a customer service person is also displayed in a pop-up window of a fault notification while the fault notification is pushed on the onboard screen. When a major fault requiring rescue occurs, the fault is reported to a cloud server in a networked state, and the cloud server will correspondingly designate a customer service person to immediately call the user so as to give the user help in time. In a non-networked state, the button for calling the customer service person is displayed in the pop-up window, such that the user can click the button to call a customer service center by means of one click and ask for help.

In one embodiment, for a fault in a specific category, at least three solutions are displayed to the user for selection. For example, when a vehicle detects a signal of low tire pressure of a tire, but at this moment, the vehicle does not need to immediately stop to wait for rescue, and can still run, the user can choose to drive by himself/herself for tire repair or repair the tire by himself/herself. A warning pop-up window is displayed on an onboard screen (such as a central control screen), and the following three solutions are provided for the user to choose:
- making an appointment for maintenance: the user may directly call a service center to make an appointment for maintenance or make an appointment in a mobile telematics APP for maintenance;
- navigating to a tire repair shop: a navigation button is displayed in the pop-up window, the user may enter a navigation page by clicking the button, a list of tire repair shops is displayed on the navigation page according to a distance from the user, and the user may quickly navigate to the nearest tire repair shop; and
- repairing the tire by himself/herself: in the pop-up window, there is a button for playing a tire repair video, the user may click the button, a temporary window is popped up for displaying the tire repair video, and the user learns to repair the tire by himself/herself.

In addition to a tire pressure fault mentioned above, for many other faults three solutions may also be displayed for them, for example, for "insufficient windshield washer fluid", three solutions provided may be, for example, notifying the user how to use the windshield washer fluid and/or how to fill the windshield washer fluid, notifying the user where to purchase the windshield washer fluid, notifying the user where the nearest repair shop is, etc.

In one embodiment, a current health state, a tire pressure and a tire temperature of the vehicle are displayed on the onboard screen. When faults exist, all the faults are classified and displayed according to severities, and faults of same category are ranked in descending order of priorities. Details of each fault may be viewed by clicking the fault so as to learn what the fault is, possible causes of the fault, and what a user can do at the moment.

Those skilled in the art should understand that the above vehicle fault warning method may be provided as a computer program product. Therefore, the invention may take the form of a computer program product implemented on one or more computer-available storage media (including but not limited to a magnetic disk memory, an optical memory, etc.) containing computer-available program codes therein.

FIG. 2 is a schematic structure diagram of a vehicle fault warning device 2000 according to one embodiment of the invention. As shown in FIG. 2, the device 2000 comprises a collection unit 210, a classification unit 220 and a display unit 230. The collection unit 210 is configured to collect, from a plurality of functional units of the vehicle, current health states thereof. The classification unit 220 is configured to classify faults of one or more functional units of the plurality of functional units according to severities when it is determined that the one or more functional units fail. The display unit 230 is configured to push a fault in a first category to a user in a first display mode, and push a fault in a second category to the user in a second display mode different from the first display mode.

In one embodiment of the above device, the plurality of functional units comprise sensors, actuators and electronic control units (ECU) in an electronic control system of the vehicle. For example, the sensors may comprise a tire pressure sensor, a temperature sensor, a water level sensor, etc. The electronic control units (ECU) may include but are not limited to an engine ECU, an anti-lock braking system (ABS) ECU, a supplemental restraint system (SRS) ECU, a body control module (BCM) ECU, a vehicle door module ECU, an anti-theft system ECU, an automatic transmission ECU, a multimedia system ECU, etc.

In one embodiment of the above device, the faults are classified into three categories according to the severities: a minor fault, a major fault and a critical fault. In another embodiment, according to occurrence positions of the faults of the automobile, the faults may be classified into: an electronic controlled gasoline injection engine fault, a transmission system fault, a steering system fault, a braking system fault, a running system fault, a vehicle body fault and an electrical system fault.

According to the invention, the display unit 230 is configured to: for the fault in the first category, notify the user of the fault on an onboard screen only in a text reminding mode, and prompt the user to drive carefully and go to a maintenance center for repair as soon as possible; and for the fault in the second category, also display a button for calling a customer service person in a pop-up window of a fault notification while the fault notification is pushed on the onboard screen. For example, when a major fault requiring rescue occurs, the fault may be reported to a cloud server in a networked state, and the cloud server will correspondingly designate a customer service person to immediately call the user so as to give the user help in time. In a non-networked state, the button for calling the customer service person may be displayed in the pop-up window, such that the user can click the button to call a customer service center by means of one click and ask for help.

In one embodiment, the display unit 230 is configured to: for a fault in a specific category, display at least three solutions to the user for selection. For example, when a vehicle detects a signal of low tire pressure of a tire, but at this moment, the vehicle does not need to immediately stop to wait for rescue, and can still run, the user can choose to drive by himself/herself for tire repair or repair the tire by himself/herself. A warning pop-up window is displayed on an onboard screen (such as a central control screen), and the following three solutions are provided for the user to choose:
- making an appointment for maintenance: the user may directly call a service center to make an appointment for maintenance or make an appointment in a mobile telematics APP for maintenance;
- navigating to a tire repair shop: a navigation button is displayed in the pop-up window, the user may enter a navigation page by clicking the button, a list of tire repair shops is displayed on the navigation page according to a distance from the user, and the user may quickly navigate to the nearest tire repair shop; and
- repairing the tire by himself/herself: in the pop-up window, there is a button for playing a tire repair video, the user may click the button, a temporary window is popped up for displaying the tire repair video, and the user learns to repair the tire by himself/herself.

In addition to a tire pressure fault mentioned above, for many other faults three solutions may also be displayed for them, for example, for "insufficient windshield washer fluid", three solutions provided may be, for example, notifying the user how to use the windshield washer fluid and/or how to fill the windshield washer fluid, notifying the user where to purchase the windshield washer fluid, notifying the user where the nearest repair shop is, etc.

In one embodiment, the aforementioned vehicle fault warning device is integrated or comprised in the automobile.

To sum up, according to the technical solutions of the invention, current health states of various functional units are collected, one or more functional units in which faults occur are classified according to severities, and a user is notified in different display modes according to a classification result, so that the user is provided with all-round and timely guidance when a fault occurs in a vehicle (for example, the user is told about what the fault is, what the severity of the fault is and what he/she should do at the moment), and better user experience is provided.

The above examples mainly illustrate a vehicle fault warning device and method, a computer storage medium and an automobile of the invention.

## Claims

1. A vehicle fault warning method, comprising:
collecting, from a plurality of functional units of the vehicle, current health states thereof;
classifying faults of one or more functional units of the plurality of functional units according to severities when it is determined that the one or more functional units fail; and
pushing a fault in a first category to a user in a first display mode, and pushing a fault in a second category to the user in a second display mode different from the first display mode, wherein
for the fault in the first category, the user is notified of the fault on an onboard screen only in a text reminding mode, and prompted to drive carefully and go to a maintenance center for repair as soon as possible; and
for the fault in the second category, a button for calling a customer service person is also displayed in a pop-up window of a fault notification while the fault notification is pushed on the onboard screen, wherein when the fault in the second category is a major fault requiring rescue occurs, the fault is reported to a cloud server in a networked state, and the cloud server will correspondingly designate a customer service person to immediately call the user so as to give the user help in time; and in a non-networked the button is displayed for calling the customer service person in the pop-up window, such that the user can click the button to call a customer service center by means of one click and ask for help.

2. The method of claim 1, wherein the plurality of functional units comprise sensors, actuators and electronic control units (ECU) in an electronic control system of the vehicle.

3. The method of claim 1, wherein the faults are classified into three categories according to the severities: a minor fault, a major fault and a critical fault.

4. The method of claim 1, wherein for a fault in a specific category, at least three solutions are displayed to the user for selection.

5. A vehicle fault warning device, comprising:
a collection unit configured to collect, from a plurality of functional units of the vehicle, current health states thereof;
a classification unit configured to classify faults of one or more functional units of the plurality of functional units according to severities when it is determined that the one or more functional units fail; and
a display unit configured to push a fault in a first category to a user in a first display mode, and push a fault in a second category to the user in a second display mode different from the first display mode,
wherein the display unit is further configured to:
for the fault in the first category, notify the user of the fault on an onboard screen only in a text reminding mode, and prompt the user to drive carefully and go to a maintenance center for repair as soon as possible; and
for the fault in the second category, also display a button for calling a customer service person in a pop-up window of a fault notification while the fault notification is pushed on the onboard screen, wherein when the fault in the second category is a major fault requiring the fault is reported to a cloud server in a networked state, and the cloud server will correspondingly designate a customer service person to immediately call the user so as to give the user help in time; and
in a non-networked state, the button is displayed for calling the customer service person in the pop-up window, such that the user can click the button to call a customer service center by means of one click and ask for help.

6. The device of claim 5, wherein the plurality of functional units comprise sensors, actuators and electronic control units (ECU) in an electronic control system of the vehicle.

7. The device of claim 5, wherein the faults are classified into three categories according to the severities: a minor fault, a major fault and a critical fault.

8. The device of claim 5, wherein the display unit is configured to:
for a fault in a specific category, display at least three solutions to the user for selection.

9. A computer storage medium, comprising a computer instruction, wherein when the computer instruction is executed, a vehicle fault warning method of any one of claims 1 to 4 is performed.

10. An automobile, comprising a vehicle fault warning device of any one of claims 5 to 8.

## Patentansprüche

1. Verfahren zur Warnung vor Fahrzeugfehlern, umfassend:
Erfassen, von einer Vielzahl von Funktionseinheiten des Fahrzeugs, des aktuellen Gesundheitszustands derselben;
Klassifizieren von Fehlern einer oder mehrerer Funktionseinheiten der Vielzahl von Funktionseinheiten nach Schweregraden, wenn bestimmt wird, dass die ein oder mehreren Funktionseinheiten fehlerhaft sind; und
Übermitteln eines Fehlers der ersten Kategorie an einen Benutzer in einem ersten Anzeigemodus und Übermitteln eines Fehlers der zweiten Kategorie an den Benutzer in einem zweiten Anzeigemodus, der vom ersten Anzeigemodus verschieden ist, wobei
bei einem Fehler der ersten Kategorie der Benutzer auf einem Bildschirm im Fahrzeug nur in einem Texterinnerungsmodus auf den Fehler hingewiesen und aufgefordert wird, vorsichtig zu fahren und so bald wie möglich ein Wartungszentrum zur Reparatur aufzusuchen; und
bei dem Fehler der zweiten Kategorie auch eine Schaltfläche zum Anrufen eines Kundendienstmitarbeiters in einem Pop-up-Fenster einer Fehlermeldung angezeigt wird, während die Fehlermeldung auf den Bildschirm im Fahrzeug übermittelt wird, wobei
wenn es sich bei dem Fehler der zweiten Kategorie um einen schwerwiegenden Fehler handelt, der einen Rettungseinsatz erforderlich macht, der Fehler in einem vernetzten Zustand an einen Cloud-Server gemeldet wird und der Cloud-Server entsprechend einen Kundendienstmitarbeiter bestimmt, der den Benutzer sofort anruft, um dem Benutzer rechtzeitig Hilfe zu leisten; und
in einem nicht vernetzten Zustand die Schaltfläche zum Anrufen des Kundendienstmitarbeiters im Pop-up-Fenster angezeigt wird, so dass der Benutzer durch Tippen auf die Schaltfläche mit einem einzigen Tastendruck ein Kundendienstzentrum anrufen und Hilfe anfordern kann.

2. Verfahren nach Anspruch 1, wobei die mehreren Funktionseinheiten Sensoren, Aktoren und elektronische Steuereinheiten (ECU, Electronic Control Unit) in einem elektronischen Steuerungssystem des Fahrzeugs umfassen.

3. Verfahren nach Anspruch 1, wobei die Fehler je nach Schweregrad in drei Kategorien eingeteilt werden: leichter Fehler, schwerer Fehler und kritischer Fehler.

4. Verfahren nach Anspruch 1, wobei dem Benutzer für einen Fehler einer bestimmten Kategorie mindestens drei Lösungen zur Auswahl angezeigt werden.

5. Vorrichtung zur Warnung vor Fahrzeugfehlern, umfassend:
eine Erfassungseinheit, die ausgelegt ist zum Erfassen, von einer Vielzahl von Funktionseinheiten des Fahrzeugs, des aktuellen Gesundheitszustands derselben;
eine Klassifizierungseinheit, die ausgelegt ist zum Klassifizieren von Fehlern einer oder mehrerer Funktionseinheiten der Vielzahl von Funktionseinheiten nach Schweregraden, wenn bestimmt wird, dass die ein oder mehreren Funktionseinheiten fehlerhaft sind; und
eine Anzeigeeinheit, die ausgelegt ist zum Übermitteln eines Fehlers der ersten Kategorie an einen Benutzer in einem ersten Anzeigemodus und Übermitteln eines Fehlers der zweiten Kategorie an den Benutzer in einem zweiten Anzeigemodus, der vom ersten Anzeigemodus verschieden ist,
wobei die Anzeigeeinheit ferner dafür ausgelegt ist:
bei einem Fehler der ersten Kategorie den Benutzer auf einem Bildschirm im Fahrzeug nur in einem Texterinnerungsmodus auf den Fehler hinzuweisen und den Benutzer aufzufordern, vorsichtig zu fahren und so bald wie möglich ein Wartungszentrum zur Reparatur aufzusuchen; und
bei dem Fehler der zweiten Kategorie auch eine Schaltfläche zum Anrufen eines Kundendienstmitarbeiters in einem Pop-up-Fenster einer Fehlermeldung anzuzeigen, während die Fehlermeldung auf den Bildschirm im Fahrzeug übermittelt wird, wobei
wenn es sich bei dem Fehler der zweiten Kategorie um einen schwerwiegenden Fehler handelt, der einen Rettungseinsatz erforderlich macht, der Fehler in einem vernetzten Zustand an einen Cloud-Server gemeldet wird und der Cloud-Server entsprechend einen Kundendienstmitarbeiter bestimmt, der den Benutzer sofort anruft, um dem Benutzer rechtzeitig Hilfe zu leisten; und
in einem nicht vernetzten Zustand die Schaltfläche zum Anrufen des Kundendienstmitarbeiters im Pop-up-Fenster angezeigt wird, so dass der Benutzer durch Tippen auf die Schaltfläche mit einem einzigen Tastendruck ein Kundendienstzentrum anrufen und Hilfe anfordern kann.

6. Vorrichtung nach Anspruch 5, wobei die mehreren Funktionseinheiten Sensoren, Aktoren und elektronische Steuereinheiten (ECU, Electronic Control Unit) in einem elektronischen Steuerungssystem des Fahrzeugs umfassen.

7. Vorrichtung nach Anspruch 5, wobei die Fehler je nach Schweregrad in drei Kategorien eingeteilt werden: leichter Fehler, schwerer Fehler und kritischer Fehler.

8. Vorrichtung nach Anspruch 5, wobei die Anzeigeeinheit dafür ausgelegt ist:
bei einem Fehler einer bestimmten Kategorie dem Benutzer mindestens drei Lösungen zur Auswahl anzuzeigen.

9. Computerspeichermedium, das eine Computeranweisung umfasst, wobei, wenn die Computeranweisung ausgeführt wird, ein Verfahren zur Warnung vor Fahrzeugfehlern nach einem der Ansprüche 1 bis 4 durchgeführt wird.

10. Kraftfahrzeug, das eine Vorrichtung zur Warnung vor Fahrzeugfehlern nach einem der Ansprüche 5 bis 8 umfasst.

## Revendications

1. Procédé d'avertissement de défauts d'un véhicule, comprenant :
la collecte, auprès d'une pluralité d'unités fonctionnelles du véhicule, de leurs états de santé actuels ;
la classification de défauts d'une ou de plusieurs unités fonctionnelles de la pluralité d'unités fonctionnelles selon leur gravité en cas de détermination d'une défaillance de la ou des unités fonctionnelles ; et
la poussée d'un défaut de première catégorie vers un utilisateur selon un premier mode d'affichage, et la poussée d'un défaut de deuxième catégorie vers l'utilisateur selon un deuxième mode d'affichage différent du premier mode d'affichage, dans lequel
pour le défaut de première catégorie, l'utilisateur est notifié du défaut sur un écran embarqué uniquement en mode texte de rappel, et invité à conduire prudemment et à se rendre dans un centre de maintenance pour réparation dans les plus brefs délais ; et
pour le défaut de deuxième catégorie, un bouton d'appel d'un chargé du service clientèle est également affiché dans une fenêtre contextuelle d'une notification de défaut lorsque la notification de défaut est poussée sur l'écran embarqué, dans lequel
lorsque le défaut de deuxième catégorie est un défaut majeur nécessitant un dépannage d'urgence, le défaut est signalé à un serveur cloud en état connecté, et le serveur cloud désignera en conséquence un chargé du service clientèle pour qu'il appelle immédiatement l'utilisateur afin de lui apporter une aide à temps ; et
en état non connecté, le bouton d'appel du chargé du service clientèle est affiché dans la fenêtre contextuelle, de sorte que l'utilisateur puisse cliquer sur le bouton pour appeler un centre de service clientèle en un seul clic et demander de l'aide.

2. Procédé selon la revendication 1, dans lequel la pluralité d'unités fonctionnelles comprend des capteurs, des actionneurs et des unités de commande électronique (ECU) dans un système de commande électronique du véhicule.

3. Procédé selon la revendication 1, dans lequel les défauts sont classifiés en trois catégories selon leur gravité : défaut mineur, défaut majeur et défaut critique.

4. Procédé selon la revendication 1, dans lequel, pour un défaut d'une catégorie spécifique, au moins trois solutions sont affichées à l'utilisateur pour sélection.

5. Dispositif d'avertissement de défauts d'un véhicule, comprenant :
une unité de collecte configurée pour collecter, auprès d'une pluralité d'unités fonctionnelles du véhicule, leurs états de santé actuels ;
une unité de classification configurée pour classifier des défauts d'une ou de plusieurs unités fonctionnelles de la pluralité d'unités fonctionnelles selon leur gravité en cas de détermination d'une défaillance de la ou des unités fonctionnelles ; et
une unité d'affichage configurée pour pousser un défaut de première catégorie vers un utilisateur selon un premier mode d'affichage, et pour pousser un défaut de deuxième catégorie vers l'utilisateur selon un deuxième mode d'affichage différent du premier mode d'affichage,
dans lequel l'unité d'affichage est configurée en outre pour :
pour le défaut de première catégorie, notifier l'utilisateur du défaut sur un écran embarqué uniquement en mode texte de rappel, et inviter l'utilisateur à conduire prudemment et à se rendre dans un centre de maintenance pour réparation dans les plus brefs délais ; et
pour le défaut de deuxième catégorie, également afficher un bouton d'appel d'un chargé du service clientèle dans une fenêtre contextuelle d'une notification de défaut lorsque la notification de défaut est poussée sur l'écran embarqué, dans lequel
lorsque le défaut de deuxième catégorie est un défaut majeur nécessitant un dépannage d'urgence, le défaut est signalé à un serveur cloud en état connecté, et le serveur cloud désignera en conséquence un chargé du service clientèle pour qu'il appelle immédiatement l'utilisateur afin de lui apporter une aide à temps ; et
en état non connecté, le bouton d'appel du chargé du service clientèle est affiché dans la fenêtre contextuelle, de sorte que l'utilisateur puisse cliquer sur le bouton pour appeler un centre de service clientèle en un seul clic et demander de l'aide.

6. Dispositif selon la revendication 5, dans lequel la pluralité d'unités fonctionnelles comprend des capteurs, des actionneurs et des unités de commande électronique (ECU) dans un système de commande électronique du véhicule.

7. Dispositif selon la revendication 5, dans lequel les défauts sont classifiés en trois catégories selon leur gravité : défaut mineur, défaut majeur et défaut critique.

8. Dispositif selon la revendication 5, dans lequel l'unité d'affichage est configurée pour :
pour un défaut d'une catégorie spécifique, afficher au moins trois solutions à l'utilisateur pour sélection.

9. Support de stockage d'ordinateur, comprenant une instruction d'ordinateur, un procédé d'avertissement de défauts d'un véhicule selon l'une quelconque des revendications 1 à 4 étant mis en œuvre lorsque l'instruction d'ordinateur est exécutée.

10. Automobile, comprenant un dispositif d'avertissement de défauts d'un véhicule selon l'une quelconque des revendications 5 à 8.
